(19) Europäisches Patentamt / European Patent Office / Office européen des brevets

(11) **EP 4 393 885 A1**

(12) **EUROPEAN PATENT APPLICATION**

(43) Date of publication:
**03.07.2024 Bulletin 2024/27**

(21) Application number: **22216689.4**

(22) Date of filing: **27.12.2022**

(51) International Patent Classification (IPC):
**C01G 53/00** (2006.01)  **C01G 53/04** (2006.01)
**H01M 4/525** (2010.01)

(52) Cooperative Patent Classification (CPC):
**C01G 53/04; C01G 53/006; C01G 53/50;**
**H01M 4/525;** C01P 2002/52; C01P 2004/51;
C01P 2004/61; C01P 2006/11; C01P 2006/12

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Umicore Finland OY**
**67900 Kokkola (FI)**

(72) Inventors:
• **VEHKAMÄKI, Ville**
**Kokkola (FI)**
• **HIETANIEMI, Marianna**
**Kokkola (FI)**
• **RÄSÄNEN, Samuli**
**Kokkola (FI)**

(74) Representative: **Umicore RDI Patent Department**
**Watertorenstraat 33**
**2250 Olen (BE)**

(54) **METHODS FOR MANUFACTURING HYDROXIDES FOR PRECURSORS OF CATHODE MATERIALS FOR RECHARGEABLE BATTERIES**

(57) The invention is in general related to hydroxides for precursors of cathode materials for rechargeable batteries. Particularly, the invention is related to methods for manufacturing aqueous slurry/slurries comprising hydroxide(s) of at least one metal element such as Ni, Co, and/or Mn. The aqueous slurry/slurries may subsequently be used in various applications, especially for making precursors for lithium transition metal oxides for rechargeable batteries.

Fig. 3

EP 4 393 885 A1

**Description**

**Technical field**

The invention is in general related to hydroxides for precursors of cathode materials for rechargeable batteries. Particularly, the invention is related to methods for manufacturing aqueous slurry/slurries comprising hydroxide(s) of at least one metal element such as Ni, Co, and/or Mn. The aqueous slurry/slurries may subsequently be used in various applications, especially for making precursors for lithium transition metal oxides for rechargeable batteries.

**Background**

Lithium-ion secondary batteries typically include a negative electrode (anode), an electrolyte, and a positive electrode (cathode) that contains a lithium-transition metal oxide as an active material capable of insertion and desorption of lithium. Lithium-transition metal oxides are generally manufactured from transition-metal hydroxides, oxides or oxyhydroxide manufactured in turn in co-precipitation processes that disclose admixing of a metal salt solution and an alkali solution with the existence of a complexing agent.

It is expected that in the future the lithium-ion battery market will be increasingly dominated by automotive applications. To be competitive, batteries for automotive applications must be produced at the lowest possible cost. A significant fraction of the cost comes from the active material, and the costs of precusor is reflected into those of the active material. Providing these precursors by a more efficient and/or cheaper process, ideally without compromising the quality thereof, can help to lower cost and boost market acceptance of lithium-ion secondary batteries.

In view of above, there is a constant need for further improvements in the manufacturing process of precursors.

**Summary**

The present invention aims to provide improved methods for making materials which may subsequently be used directly/indirectly as precursors of lithium transition metal cathode materials for positive electrodes.

Viewed from a first aspect, the invention can provide a method for manufacturing a first aqueous slurry comprising first hydroxide or oxyhydroxide particles of at least one element, wherein the at least one element include at least one of Ni, Co, and Mn. The first aqueous slurry or the first hydroxide or oxyhydroxide particles can be used as a seed particles source in a precipitation process of a second hydroxide, which in turn can be used, ultimately, as precursors of lithium transition metal cathode materials for positive electrodes. Such a method according to the present invention comprises:

- continuously supplying to a reactor vessel of a first flow of a metal salt solution comprising the one or more elements;
- continuously supplying to the reactor vessel of a second flow of an aqueous solution of one or more alkali hydroxides; and
- continuously supplying to the reactor vessel of a third flow of an aqueous solution of ammonia, i.e. ammonia aqueous solution ($NH_{3(aq)}$),

mixing said 1st, 2nd and 3rd flows so as to obtain the first aqueous slurry in the reactor vessel, and the method further comprises continuously removing a fourth flow of the first aqueous slurry from the reactor vessel;
wherein in the method:
the first aqueous slurry has a pH value being at most 13.0 and at least 12.0, said pH value being measured on a sample of the first aqueous slurry at 20°C, and
the supply of the third flow is controlled so that a $NH_{3(aq)}$ concentration in the first aqueous slurry being at least 1.0 g/l and at most 5.0 g/l to limit a growth of the first hydroxide or oxyhydroxide particles to a median particle size D50 between a range of at least 0.7 $\mu$m and at most 3.0 $\mu$m.

The hydroxide or oxyhydroxide particles of the one or more elements according to the present invention have a composition that can be presented by a general formula: $Me\text{-}O_x(OH)_{2-x}$, wherein $0 \leq x \leq 2$, and Me includes at least one of the Ni, Co and Mn,d and possibly at least one other element like an impurity such as Na, S, etc. According to the present invention, the disclosed pH values combined with the disclosed $NH_{3(aq)}$ concentration in such a continuous precipitation process contribute a steady nucleation and controllable growth to the target size of the first hydroxide or oxyhydroxide, thus the first aqueous slurry contains the first hydroxide or oxyhydroxide with a controllable particle size, which can serve as excellenct seed source for subsequent precipitation procesess. Since the first hydroxide or oxyhydroxide is prepared by a steady-state reaction it provides an efficient and repeatable way to prepare seed particles also in an industrial scale.

In the manufacturing of the first aqueous slurry, a pH value higher than 13.0 may result in too small, and potentially fragile, crystal nuclei and hence there is a risk that the slurry becomes a gel. A pH value lower than 12.0 may result in an inefficient nucleation and/or uncontrolled growth of the first hydroxide or oxyhydroxide. More preferably, the pH value is at least 12.5, and even more preferably at least 12.6. While the pH value is in a range of 12.0 - 13.0, a $NH_{3(aq)}$ concentration between 1.0 g/l and 5.0 g/l may efficiently result in first hydroxide or oxyhydroxide particles with a meidan particle size D50 in a range of 0.7 - 3.0 $\mu$m. More preferably, the $NH_{3(aq)}$ concentration is at least 1.0 g/l and at most 4.0 g/l, thus when combined with the disclosed pH values, a desired meidan particle size D50 of the first hydroxide or oxyhydroxide between a range of at least 0.7 $\mu$m and at most 2.0 $\mu$m, can be obtained. Even more preferably, the $NH_{3(aq)}$ concentration is at least 2.0 g/l and at most 4 .0 g/l, thus when combined with the disclosed pH values, a desired meidan particle size D50 of the first hydroxide or oxyhydroxide between a range of at least 1.0 $\mu$m and at most 2.0 $\mu$m, may be obtained.

Within the concept of the first aspect according to the present invention, conditions used in the method, such as temperature and mixing settings, may be further adjusted to optimize the resulting first aqueous slurry. Some embodiments are described in the detailed description.

As mentioned, the resulting first aqueous slurry according to the present invention can serve as excellenct seed source for the subsequent precipitation. Thus, a second aspect of the invention is to provide a method for manufacturing a second aqueous slurry comprising second hydroxide or oxyhydroxide particles of one or more elements, wherein the one or more elements include at least Ni, Co, and Mn. The second hydroxide or oxyhydroxide particles can be used, ultimately, as precursors of lithium transition metal cathode active materials for positive electrodes. Such a method according to the present invneion comprises:

a) providing an amount of a first aqueous slurry comprising first hydroxide or oxyhydroxide particles into a reactor vessel, wherein the first hydroxide or oxyhydroxide has a meidan particle size D50 between a range of at least 0.7 $\mu$m and at most 3.0 $\mu$m; preferably the first aqueous slurry and/or the first hydroxide or oxyhydroxide is obtained by the method according to the first aspect of the invention as disclosed herein;

b) supplying to the reactor vessel of a fifth flow of a metal salt solution comprising the one or more elements, and optionally also a seventh flow of an aqueous solution of ammonia ($NH_{3(aq)}$); and

c) establishing or maintaining conditions in the reactor vessel that cause a precipitation of the one or more elements from the metal salt solution as a hydroxide on the first hydroxide or oxyhydroxide to obtain in the reactor vessel the second aqueous slurry comprising the second hydroxide or oxyhydroxide particle of the one or more elements.

According to the present invention, the disclosed seed slurry, i.e. the first aqueous slurry, combined with the disclosed precipitation steps contribute a steady and/or controlled growth of the second hydroxide or oxyhydroxide on the seeds, i.e. the first hydroxide or oxyhydroxide particles, without further nucleation and agglomeration, so that the second aqueous slurry contains the second hydroxide or oxyhydroxide with a homogeneously distributed desired particle size and the second hydroxide or oxyhydroxide particles possess excellent sphericity with a narrow particle size distribution range. The excellent sphericity and narrow particle size distribution range of the second hydroxide or oxyhydroxide according to the present invention, when served as precursors for cathode material, stay in the cathode material. In other words, the cathode material also has the excellent sphericity. Spherical cathode material has an advantageous link to tap density.

Typically in the known manufacturing methods the hydroxides for precursors of cathode materials are prepared by a two-step in-situ co-precipitation process in which there is a first step of a nucleation process for generating particles, and a second step of a particle growth process for causing the nuclei that were generated in the nucleation process to grow. One problem in these kinds of manufacturing methods is a controllability of the processes since the nucleation process is fast, i.e. new nuclei generate fast, and the reaction conditions of the growth process differ from the nucleation process: there is a potential risk that when changing from the nucleation process to the growth process there is a phase where the nuclei grow and generate at the same time. Therefore, there is a risk that the range of the particle size distribution of the nuclei formed becomes large and non-homogenous. Further challenges may be that it is hard to repeat the processes reproducibly way as the amount of generated nuclei easily varies and hence the overall reaction time between the processes of preparation of same sized and metal content hydroxide vary.

In case of the first and second aspects of the invention it is possible to separate the nucleation and particle growth reaction to separate individual processes that is advantageous for process controlling. Since there is no need for changing from the nucleation process to the growth process in the manufacturing of hydroxides, both processes may be done with higher repeatability and predictability and hence an improved production scalability can be obtained compared to the two-step in-situ co-precipitation processes.

Following the concepts of the first and second aspects of the present invention, it is further provided a third ascept of the invention, being a method for manufacturing a powderous hydroxide or oxyhydroxide of one or more elements, wherein the method comprises I) providing an aqueous slurry according to the second aspect of the invention, II) separating the hydroxide or oxyhydroxide from a liquid fraction of the aqueous slurry and III) drying the separated hydroxide or oxyhydroxide.

It is also provided a fourth aspect of the invention, being a use of an aqueous slurry according to the second aspect of the invention or a powderous hydroxide or oxyhydroxide according to the third aspect of the invention for manufacturing a positive electrode active material for secondary batteries.

It is further provided a fifth aspect of the invention, being a method for manufacturing a positive electrode active material by using the hydroxide or oxyhydroxide particles manufactured according to first and second aspects of the invention.

Various embodiments according to the present invention are disclosed in the claims as well as in the description. The embodiments and examples recited in the claims and in the description are mutually freely combinable unless otherwise explicitly stated. Throughout the entire specification, if any numerical ranges are provided, the ranges include also the endpoint values unless otherwise explicitly stated.

**Brief description of the drawings**

By means of further guidance, figures are included to better appreciate the teaching of the present invention, wherein:

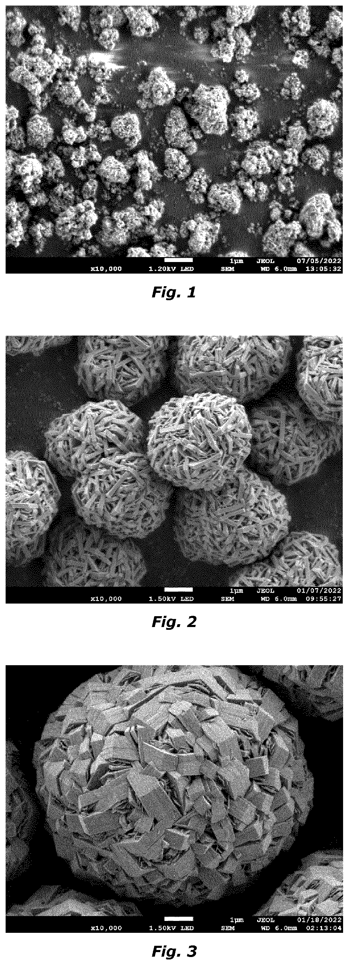

Fig. 1    shows a scanning electron microscope (SEM) image of particles obtained from the process of Example 1.1;
Fig. 2    shows a SEM image of particles obtained from the process of Example 1.2;
Fig. 3    shows a SEM image of particles obtained from the process of Example 1.3;
Fig. 4    shows a SEM image of particles obtained from the process of Example 2.2;
Fig. 5    shows a SEM image of particles obtained from the process of Example 2.3; and
Fig. 6    shows a SEM image of particles obtained from 2 hours after the start of the process of Comparative Example 1.

**Detailed description**

In the following detailed description, preferred embodiments are described in detail to enable practice of the invention. Although the invention is described with reference to these specific preferred embodiments, it will be understood that the invention is not limited to these preferred embodiments. To the contrary, the invention includes numerous alternatives, modifications and equivalents as will become apparent from consideration of the following detailed description and accompanying drawings.

The term "comprising", as used herein and in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a composition comprising components A and B" should not be limited to compositions consisting only of components A and B. It means that with respect to the present invention, the only relevant components of the composition are A and B. Accordingly, the terms "comprising" and "including" encompass the more restrictive terms "consisting essentially of" and "consisting of".

The term "a positive electrode active material" (also known as cathode active material) as used herein and in the claims is defined as a material which is electrochemically active in a positive electrode or cathode. By active material, it must be understood to be a material capable to capture and release Li ions when subjected to a voltage change over a predetermined period of time.

The term "a positive electrode" as used herein is defined as a material comprising a positive electrode active material also in addition to other components which are not electrochemically active, in particular conductivity agents such as carbon black or binders such as PVDF.

The term "concentration of NH3(aq)" or the like as used herein means the concentration of ammonia in an aquesou solution.

In a first aspect, the invention provides a method for manufacturing a first aqueous slurry comprising first hydroxide or oxyhydroxide particles of at least one element, wherein the at least one element include at least one of Ni, Co, and Mn. The first aqueous slurry or the first hydroxide or oxyhydroxide particles can be used as a seed particles source in a precipitation process of a second hydroxide or oxyhydroxide, which in turn can be used, ultimately, as precursors of lithium transition metal cathode materials for positive electrodes. Such a method according to the present invneion comprises:

- continuously supplying to a reactor vessel of a first flow of a metal salt solution comprising the one or more elements;
- continuously supplying to the reactor vessel of a second flow of an aqueous solution of one or more alkali hydroxides; and

- continuously supplying to the reactor vessel of a third flow of an aqueous solution of ammonia, i.e. ammonia aqueous solution ($NH_{3(aq)}$),

mixing said 1st, 2nd and 3rd flows so as to obtain the first aqueous slurry in the reactor vessel, and the method further comprises continuously removing a fourth flow of the first aqueous slurry from the reactor vessel;
wherein in the method:
the first aqueous slurry has a pH value being at most 13.0 and at least 12.4, said pH value being measured on a sample of the first aqueous slurry at 20°C, and
the third flow is controlled so that a $NH_{3(aq)}$ concentration in the first aqueous slurry being at least 1.0 g/l and at most 5.0 g/l to limit a growth of the first hydroxide or oxyhydroxide particles to a median particle size D50 between a range of at least 0.7 $\mu$m and at most 3.0 $\mu$m.

During the course of manufacturing process, the precipitated hydroxide may be partially oxidized, depending on the atmosphere of the manufacturing process. Thus, the aqueous slurry may contain oxyhydroxide. It is to be noted that an atmospheric condition is not essential to achieve the claimed invention.

According to such method of the present invention, the disclosed pH values combined with the disclosed $NH_{3(aq)}$ concentration in such a continuous precipitation process contribute a steady nucleation and controllable growth of the first hydroxide or oxyhydroxide, thus the first aqueous slurry contains the first hydroxide or oxyhydroxide with a controllable particle size, which can serve as excellenct seed source for subsequent precipitation processes. Since the first hydroxide or oxyhydroxide is prepared by a steady-state reaction it provides an efficient and repeatable way to prepare seed particles also in an industrial scale. As appreciated by the skilled person the pH value can be measured by using a pH meter, for example 780 Metrohm meter. As appreciated by the skilled person the NH3(aq) concentration can be measured by using a commercially available titrator, for example Metrhom 848 Titrino Plus.

In the method, the continuous supply of flows and continuous removal of flow are generally known as a continuos mode, in the present case continuous precipitation, in the art and may be implemented by using a continuous stirred tank reactor (CSTR) with an overflow or other similar systems known by the skilled person in the art. The mixing step included in the continuous mode facilitates the chemical reactions in the reactor vessel to reach a stable state (i.e. normal state) so as to obtain the first aqueous slurry. The time needed for reaching the stable state depends on the reactor effective volume and total flow rate as known by the skilled person, and thus the time can vary according the real applications and be applied by the skilled person without undue burden.

To control the growth of the first hydroxide or oxyhydroxide described above it may be beneficial to control mixing of the first aqueous slurry in the reactor vessel. According to some embodiments, wherein the step of mixing is performed with a mixing energy, wherein the mixing energy is at least 15 kW per $m^3$ of the first aqueous slurry, preferably at least 20 kW per $m^3$ of the first aqueous slurry and more preferably at least 25 kW per $m^3$ of the first aqueous slurry, to keep the particles separate, i.e. prevent agglomeration.

According to some embodiments, the first aqueous slurry in the reactor vessel can have a temperature being at least 40°C and at most 80°C, and preferably at least 45°C and at most 65°C, and more preferably at least 50°C and at most 60°C.

According to some embodiments, a non-oxidizing gas atmosphere is maintained in the reactor vessel, wherein the non-oxidizing gas is preferably $N_2$ or Ar or a mixture of $N_2$ and Ar.

According to some embodiments, the $NH_{3(aq)}$ concentration in the first aqueous slurry in the reactor vessel is at least 1.0 g/l and at most 4.0 g/l to limit the median particle size D50 of the first hydroxide or oxyhydroxide between a range of at least 0.7 $\mu$m and at most 2.0 $\mu$m. According to some embodiments, the $NH_{3(aq)}$ concentration in the first aqueous slurry in the reactor vessel is at least 2.0 g/l and at most 4.0 g/l to limit the median particle size D50 of the first hydroxide or oxyhydroxide between a range of at least 1.0 $\mu$m and at most 2.0 $\mu$m.

The target median particle size d50 can be achieved by adjusting conditions of the method according to the first aspect of the invention. According to some embodiments, the method comprises decreasing the median particle size d50 of the first hydroxide or oxyhydroxide by:

- decreasing the ratio of the amount of the first flow to the amount of the second flow to increase the pH value of the first aqueous slurry; and/or
- decreasing the ratio of the amount of the third flow to the sum of the amounts of the first flow and the second flow to decrease the $NH_{3(aq)}$ concentration in the aqueous slurry; and/or
- increasing the mixing energy.

According to some embodiments, the method comprises increasing the median particle size d50 of the first hydroxide or oxyhydroxide by:

- increasing the ratio of the amount of the first flow to the amount of the second flow to decrease the pH of the first aqueous slurry; and/or
- increasing the ratio of the amount of the third flow to the sum of the amounts of the first flow and the second flow to increase the $NH_{3(aq)}$ concentration in the first aqueous slurry; and/or
- decreasing the mixing energy.

According to the some embodiments of the first aspect of the invention, the at least one element in the first hydroxide or oxyhydroxide particles include:

- Ni in a content x, wherein 5.0 mol% $\leq$ x%; preferably x $\geq$ 60.0 mol%, more preferably x $\geq$ 80.0 mol%;
- Co in a content y, wherein $0 \leq y \leq 30.0$ mol%, and
- Mn in a content z, wherein $0 \leq z \leq 85.0$ mol%,
- Al in a content q, wherein $0 \leq q \leq 10.0$ mol%, and
- one or more additional elements in a content r, wherein the additional elements are elements from the list of B, Ba, Ca, Ce, Cr, Fe, La, Mg, Mo, Nb, Si, Sr, Ti, Y, V, W, Zn, Na, S and Zr, wherein $0 \leq r \leq 5.0$ mol%, and

wherein x, y, z, q and r are contents expressed as mol% relative to the total molar content of the at least one element in the first hydroxide or oxyhydroxide, and wherein x+y+z+q+r = 100 mol%, wherein the values x,y,z,q,r are measured by Inductively Coupled Plasma (ICP) method. It can be understood that the expression $\geq$0 includes the absence of an element.

As discussed above, the resulting first aqueous slurry according to the present invention can serve as excellenct seed source for the subsequent precipitation. Thus, the prevent invention also provides a method, according to the second aspect of the invention, for manufacturing a second aqueous slurry comprising second hydroxide or oxyhydroxide particles of one or more elements, wherein the one or more elements include at least Ni, Co, and Mn. The second hydroxide or oxyhydroxide particles can be used, ultimately, as precursors of lithium transition metal cathode active materials for positive electrodes. Such a method according to the present invneion comprises:

a) providing an amount of a first aqueous slurry comprising first hydroxide or oxyhydroxide particles into a reactor vessel, wherein the first hydroxide or oxyhydroxide has a meidan particle size D50 between a range of at least 0.7 $\mu$m and at most 3.0 $\mu$m; preferably the first aqueous slurry and/or the first hydroxide or oxyhydroxide is obtained by the method according to the first aspect of the invention as disclosed herein;
b) supplying to the reactor vessel of a fifth flow of a metal salt solution comprising the one or more elements
c) supplying to the reactor vessel of a sixth flow of an aqueous solution of one or more alkali hydroxides, and optionally also a seventh flow of an aqueous solution of ammonia ($NH_{3(aq)}$); and
d) establishing or maintaining conditions in the reactor vessel that cause a precipitation of the one or more elements from the metal salt solution as a hydroxide on the first hydroxide or oxyhydroxide to obtain in the reactor vessel the second aqueous slurry comprising the second hydroxide or oxyhydroxide particle of the one or more elements.

The disclosed seed slurry, i.e. the first aqueous slurry, combined with the disclosed precipitation steps contribute a steady growth of the second hydroxide on the seeds, i.e. the first hydroxide or oxyhydroxide particles, without further nucleation and agglomeration, so that the second aqueous slurry contains the second hydroxide or oxyhydroxide with a homogeneously distributed desired particle size and the second hydroxide or oxyhydroxide particles possess excellent sphericity with a narrow particle size distribution range. As described above, these ultimately contribute multiple benefits to the rechargeable batteries.

According to some embodiments, the step a) providing an amount of a first aqueous slurry comprising first hydroxide or oxyhydroxide particles into a reactor vessel includes performing the method according to the first aspect of the invention.

According to some embodiments, the first hydroxide or oxyhydroxide has a meidan particle size D50 between a range of at most 2.0 $\mu$m, more preferably at most 1.0 $\mu$m. Smaller seed particle size may contribute to a denser core and/or better sphericality of the second hydroxide or oxyhydroxide particles.

According to some embodiments, the step c) establishing or maintaining the conditions in the reactor vessel that cause a precipitation includes supplying to the reactor vessel of a seventh flow of an aqueous solution of ammonia ($NH_{3(aq)}$), which serves as an ammonium ion donor.

When the particles of the second hydroxide or oxyhydroxide have reached a specified, target particle size, the precipitaion is terminated.

Further optimized conditions can be applied. According to some embodiments, the sixth flow is controlled so that the second aqueous slurry in the reactor vessel has a pH value of at most 12.2 and preferably at least 10, and more preferably at most 12.1 and at least 11.0, wherein the pH value of the second aqueous slurry is the pH value as measured on a sample of the second aqueous slurry at 20°C. The disclosed pH values contributes to the particle size preferably such that a hydroxide particle growth reaction occurs over the nucleation reaction and hardly any new nuclei are generated in the aqueous slurry and a metal hydroxide having a specified particle size is formed.

According to some embodiments, the seventh flow is controlled so that an $NH_{3(aq)}$ concentration in the second aqueous slurry being at least 1.0 g/l and at most 20.0 g/l, more preferably at least 1.5 g/L and at most 15 g/L.

According to some embodiments, wherein b) and c) are continued until a target median particle size D50 of the second hydroxide or oxyhydroxide particles in the second aqueous slurry being obtained and/or a predetermined maximum value of a solid content of the second aqueous slurry being obtained.

According to some embodiments, the step c) includes applying a mixing energy to the second aqueous slurry, wherein the mixing energy is at most 40 kW per m$^3$ of the second aqueous slurry, preferably at most 35 kW per m$^3$ of the second aqueous slurry; and/or the mixing energy is at least 5 kW per m$^3$ of the second aqueous slurry, preferably at least 10 kW per m$^3$ of the second aqueous slurry.

According to some embodiments, the step c) includes maintaining a temperature of the second aqueous slurry in the reactor vessel at least in 45°C, and preferably at least in 75°C, and more preferably at least or equal to 80°C. It is found that the temperature of at least or equal to 80°C prevents the undesirable cracking phenomenon of the second hydroxide or oxyhydroxide particle.

According to the second aspect of the invention, the the one or more elements in the second hydroxide or oxyhydroxide include:

- Ni in a content b, wherein 5.0 mol% ≤ b ≤ 99.0 mol%,
- Co in a content c, wherein 0 ≤ c ≤ 30.0 mol%,
- Mn in a content d, wherein 0 ≤ d ≤ 85.0 mol%,
- Al in a content e, wherein 0 ≤ e ≤ 10.0 mol%, and
- one or more additional elements in a content f, wherein the additional elements are elements from the list of B, Ba, Ca, Ce, Cr, Fe, La, Mg, Mo, Nb, Si, Sr, Ti, Y, V, W, Zn, Na, S and Zr, wherein 0 ≤ f ≤ 5.0 mol%, and

wherein b, c, d, e and f are contents expressed as mol% relative to the total molar content of the one or more elements in the second hydroxide or oxyhydroxide, and wherein b+c+d+e+f = 100 mol%, wherein the values x,y,z,q,r are measured by Inductively Coupled Plasma (ICP) method. It can be understood that the expression ≥0 includes absence of element. Preferably, x ≠ b; alternatively, wherein x > b and/or b ≥ 60.0 mol%, wherein d ≤ 30.0 mol%, wherein (b+d) ≥ 1.0 mol%; and/or wherein d ≥ 50.0 mol%, wherein f ≤ 3.0 mol%.

According to some preferred embodiments according to the second aspect of the invention, wherein step a) the first aqueous slurry is provided in a volume V(1) into the reactor vessel having an effective volume V(2), wherein the first aqueous slurry comprises hydroxide or oxyhydroxide particles having a median particle size d50 = $D_1$, and the first aqueous slurry has a solid content SG(1) expressed as weight of hydroxide or oxyhydroxide particles per volume of the first aqueous slurry, and wherein the volume V(1) is supplied in the the reactor vessel based on equation 1:

$$V(1) = \frac{V(2) \times SG(2) \times D_1^3}{SG(1) \times D_2^3} \qquad (equation\ 1)$$

wherein SG(2) is a target solid content of the second aqueous slurry expressed as weight of hydroxide or oxyhydroxide particles per volume of the second aqueous slurry, and $D_2$ is a target median particle size D50 of the second hydroxide or oxyhydroxide particles expressed in μm.

According to some preferred embodiments according to the second aspect of the invention, wherein the fifth flow is supplied with a flow rate expressed as a volume per unit of time, wherein the metal salt solution has a concentration of the one or more elements expressed as mol. per unit of volume, and wherein the mathematical product of the flow rate and the concentration increases continuously during the time period (T1-T2), preferably wherein an aqueous slurry of seed particles is provided in the reactor vessel, the concentration of the one or more elements in the metal salt solution is kept constant during the time period T1-T2, wherein the flow rate of the metal salt solution (a unit, L/h) at a time instant t within the time period T1-T2 is expressed by the following equation:

$$f_{flow\ rate}(t) = \frac{m_1 \left( \left( \frac{G(t) \cdot \Delta t + D'\ 50}{D'\ 50} \right)^3 - 1 \right) \cdot M_{Me}}{\Delta t \cdot c_{Me} \cdot M_{Me(OH)_2}} \qquad (equation\ 1)$$

wherein $m_1$ is a mass (grams) of the seed particles provided in the reactor vessel, G(t) is a growth rate of the hydroxide or oxyhydroxide particle at the time instant t ($\mu$m/h), wherein the value of G(t) is nonzero, $\Delta$t is the time period T1-T2 expressed in hour(h), D'50 the median particles size of the seed particles expressed in $\mu$m, and $M_{Me}$ is a molar mass of the one or more elements (grams/mol), $c_{Me}$ is the concentration of the one or more elements in the metal salt solution (grams/L) and $M_{Me(OH)2}$ is a molar mass of the hydroxide or oxyhydroxide of the one or more elements (grams/mol). Preferably the value of G(t) is smaller or equal to 2 $\mu$m/h, more preferably smaller or equal to 1.5 $\mu$m/h.

Within the concept of the third aspect according to the present invention,it is also provided a method for manufacturing a powderous hydroxide or oxyhydroxide of one or more elements, wherein the method comprises I) providing an aqueous slurry according to the methods of the invention described above, II) separating the hydroxide or oxyhydroxide particles from a liquid fraction of the aqueous slurry and III) drying the separated hydroxide or oxyhydroxide particles.

During the course of manufacturing process, the hydroxide or oxyhydroxide particles from the aqueous slurry may be further partially oxidized.

a precursor comprising Ni, Co and Mn in a molar ratio x:y:z can be prepared in a mixed form by precipitation reactions, with the following steps: (1) continuous precipitation of seed particles according to the first aspect of the invention followed by a batch precipitation of mixed hydroxides in a reactor with a NaOH and mixed metal salt under the controlled pH according to the second aspect of the invention, (2) removal of the precursor suspension and filtration, (3) drying of the filtered wet cake. In step (1) the mixed salt may be a mixed sulfate salt, and the pH typically between 11 and 12. Efficient precursor drying is typically conducted above 100°C for a certain time to remove most of the moistures. The typical moisture content after drying is below 1wt%, and can be measured by the well-known Karl Fischer titrimetric method at 250°C (ASTM D6869). Before drying, the precursor has a pure or ideal hydroxide crystal structure (with space group P-3m1).

The dried hydroxide or oxyhydroxide particles, i.e. powderous hydroxide or oxyhydroxide, according to the invention can be used for manufacturing a positive electrode active material. The powderous hydroxide or oxyhydroxide can be mixed with a lithium source so as to obtain a mixture. The mixture is sintered at a temperature between 650°C and 1000°C. Optionally, a heat treatment at a temperature of 105 °C to 750 °C can be performed before the mixing.

Thus, the present invention also concerns a use of the aqueous slurry comprising hydroxide or oxyhydroxide particles obtainable by a method according to the first aspect of the invention, and a use of a powderous hydroxide or oxyhydroxide obtainable according to the second aspect of the invention, for manufacturing a positive electrode active material for secondary batteries.

**Examples**

The present invention is further illustrated with reference to some examples and comparative examples. In all of the examples, a pH value refers to a value measured from a sample at a temperature of 20 °C. Further, in all of the processes of the examples a reducing atmosphere was ensured by applying a flow of nitrogen gas into the reactor vessel during the precipitation reaction except as otherwise indicated.

Measurement methods used in the examples

$NH_{3(aq)}$ concentration analysis

The $NH_{3(aq)}$ concentration of the example samples was measured by end point titration using an instrument of Metrhom 848 Titrino Plus. A measurement sample was prepared by adding one milliliter of a sample solution, 30-40 ml of deionized water and 1 ml of 1M NaOH to a titration vessel. The measurement sample was titrated to the end point by 0.1M HCl.

pH analysis

pH value of a sample was measured by a 780 Metrohm meter calibrated with pH 7 and pH 13 standards. The sample was cooled to 20°C and the pH was measured from the sample by lowering the pH electrode into the sample and waiting for the pH reading to be leveled.

Solid content analysis

For the determination of the solid content of precipitated hydroxide in the aqueous slurry, a sample taken from the aqueous slurry (the "reaction mixture" in the examples) was mixed well and 10-30 ml of the mixed sample was pipetted onto the filter paper that was further filtered onto a washed and weighed 0,8 um membrane. The filtered membrane was rinsed with DI water followed by drying and measuring the weight of the dried membrane from which the solid content, expressed as weight of the dried hydroxide per liter of the aqueous slurry in g/l was calculated.

Surface area analysis

The specific surface area (SA) of the example samples was measured with the Brunauer-Emmett-Teller (BET) method by using a Quantachrome Monosorb. A powder sample was put into the sample tube and heated at 90 °C under a nitrogen (N2) gas for 2 hours prior to the measurement in order to remove adsorbed species. The sample was then de-gassed at room temperature for five minutes. The instrument performed the nitrogen adsorption test at 77 K. By obtaining the nitrogen isothermal absorption/desorption curve, the total specific surface area of the sample in m2/g was derived.

Tap density analysis

The tap density (TD) measurement of the example samples was carried out by mechanically tapping a graduated measuring cylinder (100 ml) containing the sample (having a mass W, around 60-120 g). After observing the initial powder volume, the measuring cylinder was mechanically tapped for 15 mins, so that no further volume (V in cm$^3$) or mass (W) change was observed. The TD was calculated as TD = W/V. The TD measurement was carried out on an J.Engelsmann Stamping volumeter STAV II instrument.

Particle size distribution (PSD) analysis

PSD was measured using a Malvern Mastersizer 3000 with a Hydro MV wet dispersion unit after dispersing particles of a sample in an aqueous medium. To improve the dispersion of the metal hydroxide powder, sufficient ultrasonic irradiation and stirring was applied, and an appropriate surfactant was introduced. An average particle size D10, D50, and D90 is the value of the particle diameter at 10%, 50% and 90%, respectively, in the cumulative distribution and a span value is a value of (D90-D10)/D50.

Metal content analysis

The metal content of the hydroxides were measured by the Inductively Coupled Plasma - Optical Emission Spectrometry (ICP-OES) method using an Agilent ICP 720-OES instrument. 1 gram of a powder sample of each example was dissolved into 50 mL of high purity hydrochloric acid in an Erlenmeyer flask. The flask was covered by a watch glass and heated on a hot plate at 380 °C until complete dissolution of the sample. After being cooled to room temperature, the solution and the rinsing water of Erlenmeyer flask were transferred to a 250 mL volumetric flask. Afterwards, the volumetric flask was filled with deionized (DI) water up to the 250 mL mark, followed by complete homogenization. An appropriate amount of the solution was taken out by a pipette and transferred into a 250 mL volumetric flask for the second dilution, where the volumetric flask was filled with the internal standard and 10% hydrochloric acid up to the 250 mL mark and then homogenized. Finally, this solution was used for the ICP-OES measurement. The contents of metals, such as Ni, Mn, and Co, are expressed as mol% of the total metal content in the measured hydroxide.

Example 1.1

An aqueous slurry of metal hydroxide was prepared according to the following process:
A starting solution was prepared by placing 100 L of DI water and 1.0 L of 220 g/L aqueous solution of ammonia (NH$_3$(aq)) in a 200 L reactor vessel and adjusting the reactor temperature to 55 °C and kept at this temperature throughout the process. 5.5 M NaOH solution was added so that a pH value of the starting solution in the reactor vessel was adjusted to 12.6-12.8.
Next, 2 M NiSO$_4$ solution with a feed rate of 30 L/h, 220 g/L NH$_3$(aq) with a feed rate of 0.52 L/h and 5.5 M NaOH solution were added continuously in the reactor vessel. A precipitation reaction was established and maintained by mixing the solutions with a mixer with a power density around 35 kW/m$^3$ and adding the NaOH solution so that the pH in the reactor was kept at 12.6 to 12.8, so as to prepare a reaction mixture, an aqueous slurry. A NH$_{3(aq)}$ concentration in the reaction mixture was kept around 2 g/L. The reaction was done in a continuous mode. When the reaction reached a stable state, around 24 hours after the start, a reaction resultant, i.e. the aqueous slurry of hydroxide of nickel, NiOH$_2$, (i.e. seed particles) having D50 of 1.2 μm, was collected from the overflow of the reactor vessel.

Example 1.2 (particle growth process)

A starting solution was prepared by placing 6 L of DI water, 55 mL of 220 g/L NH$_3$(aq), and 1.56 L of 130 g/L aqueous slurry comprising seed particles obtained from Example 1.1 in a reactor vessel having an effective volume of 8.75 L and adjusting the temperature in the reactor vessel to 85 °C and kept at this temperature throughout the process.

Next, a precipitation reaction was performed by adding 120 g/L metal sulfate solution comprising Ni, Mn, and Co (in a stoichiometric molar ratio, Ni:Mn:Co of 65:15:20), 220 g/L $NH_3$(aq), and 230 g/L NaOH solution, while mixing with a power density of around 30 kW/m$^3$ for the first 30 hours and with a power density of around 20 kW/m$^3$ for the rest of the process. A feed rate of the metal sulfate solution was 450 mL/h for the first two hours and 980 mL/h for the rest of the process. During the reaction the NaOH solution was added so that a pH value of the reaction mixture in the reactor vessel was kept steady at 11.8 ± 0.1 and a feed rate of the $NH_3$(aq) was adjusted so that a $NH_{3(aq)}$ concentration of the reaction mixture was kept at 2 to 3 g/L. A sample of the reaction mixture was taken every two hours and the D50 was measured from it. The process was stopped when the D50 of the sample reached approximately the target value of 3.9 $\mu$m, a duration of the process was 36 h. A part of a liquid fraction of the reaction mixture was pumped out from the reactor during the process by using a concentrator and a solid content of the reaction mixture in the reactor vessel was around 800 g/L in the end of the process.

Example 1.3 (particle growth process)

A starting solution was prepared by placing 6 L of DI water, 350 mL of 220 g/L $NH_3$(aq), and 515 mL of 800 g/L aqueous slurry comprising grown seeds obtained from Example 1.2 added in a reactor vessel having an effective volume of 8.75 L and adjusting the temperature in the reactor vessel to 85 °C and kept at this temperature throughout the process.

Next, a precipitation reaction was performed by adding 120 g/L metal sulfate solution comprising Ni, Mn, and Co (in a stoichiometric molar ratio, Ni:Mn:Co of 65:15:20), 220 g/L $NH_3$(aq), and 230 g/L NaOH solution, and while mixing with a power density of around 30 kW/m$^3$ for the first 6 hours and with a power density of around 20 kW/m$^3$ for the rest of the process. A feed rate of the metal sulfate solution was 600 mL/h in the beginning and increased continuously all the time according to equation 1 below being 3700 mL/h in the end of the process to keep the particle growth rate constant at 0.4 $\mu$m/h.

Equation 1:

$$f_{flow\ rate}(t) = \frac{m_1\left(\left(\dfrac{G(t)\cdot \Delta t + D'50}{D'50}\right)^3 - 1\right)\cdot M_{Me}}{\Delta t \cdot c_{Me}\cdot M_{Me(OH)_2}} \qquad (equation\ 1)$$

wherein $m_1$ is a mass (grams) of the seed particles provided in the reactor vessel, $G(t)$ is a growth rate of the hydroxide particle at the time instant t (a unit, $\mu$m/h), wherein the value of $G(t)$ is nonzero, $\Delta t$ is the time period T1-T2 expressed in hour(h), D'50 the median particles size of the seed particles expressed in $\mu$m, and $M_{Me}$ is a molar mass of the one or more elements (grams/mol), $c_{Me}$ is the concentration of the one or more elements in the metal salt solution (grams/L) and $M_{Me(OH)2}$ is a molar mass of the hydroxide of the one or more elements (grams/mol).

During the reaction a feed rate of the NaOH solution was adjusted so that a pH value of the reaction mixture in the reactor vessel was kept steady at 11.8 ± 0.1 and a feed rate of the NH3(aq) was adjusted so that a $NH_{3(aq)}$ concentration in the reaction mixture was kept steady at 12.0 ± 1 g/L. A sample of the reaction mixture was taken every two hours and the D50 was measured from it. The process was stopped when the D50 of the sample reached approximately the target value of 10.2 $\mu$m, a duration of the process was 15 h. A part of a liquid fraction of the reaction mixture was pumped out from the reactor during the process by using a concentrator and a solid content of the reaction mixture, which is an aqueous slurry comprising hydroxide particles, in the reactor vessel was around 780 g/L in the end of the process.

Example 2.2 (particle growth process)

A starting solution was prepared by placing 6 L of DI water, 55 mL of 220 g/L $NH_3$(aq), and 410 mL of 130 g/L aqueous slurry comprising seed particles of obtained in Example 1.1 in a reactor vessel having an effective volume of 8.75 L and adjusting the temperature in the reactor vessel to 85 °C and kept at this temperature throughout the process. The slurry of the seed particles of $Ni(OH)_2$ having D50 of 1.2 $\mu$m was prepared similarly as described hereinabove.

Next, a precipitation reaction was performed by adding 120 g/L metal sulfate solution comprising Ni, Mn, and Co (in a stoichiometric molar ratio, Ni:Mn:Co of 94:03:03), 220 g/L $NH_3$(aq), and 230 g/L NaOH solution, while mixing with a power density of around 33 kW/m$^3$ for the first 30 hours and with a power density of around 30 kW/m$^3$ for the rest of the process. A feed rate of the metal sulfate solution was 450 mL/h for the first two hours and 980 mL/h for the rest of the process. During the reaction the NaOH solution was added so that a pH value of the reaction mixture in the reactor vessel was kept steady at 11.8 ± 0.1 and a feed rate of the $NH_3(aq)$ was adjusted so that a $NH_{3(aq)}$ concentration of the reaction mixture was kept at 2 to 3 g/L. A reactor sample of the reaction mixture was taken every two hours and the D50 was measured from it. The process was stopped when the D50 of the reactor sample reached the target value of 5.0 μm, a duration of the process was 48 h. A part of a liquid fraction of the reaction mixture was pumped out from the reactor during the process and a solid content of the reaction mixture, an aqueous slurry comprising grown seeds, in the reactor vessel was around 440 g/L in the end of the process.

Example 2.3 (particle growth process)

A starting solution was prepared by placing 6 L of DI water, 350 mL of 220 g/L $NH_3(aq)$, and 447 mL of 440 g/L aqueous slurry comprising seeds particles obtained in Example 2.2 were added in a reactor vessel having an effective volume of 8.75 L and adjusting the temperature in the reactor vessel to 85 °C and kept at this temperature throughout the process.

Next, a precipitation reaction was performed by adding 120 g/L metal sulfate solution comprising Ni, Mn, and Co (in a stoichiometric molar ratio, Ni:Mn:Co of 94:03:03), 220 g/L $NH_3(aq)$, and 230 g/L NaOH solution, while mixing with a power density of around 30 kW/m$^3$ for the first 6 hours and with a power density of around 20 kW/m$^3$ for the rest of the process step. A feed rate of the metal sulfate solution was 540 mL/h in the beginning and increased continuously all the time according continuously all the time being 1900 mL/h in the end of the process to equation 1 disclosed hereinabove to keep the particle growth rate constant at 0.5 μm/h. During the reaction a feed rate of the NaOH solution was adjusted so that a pH value of the reaction mixture in the reactor vessel was kept steady at 11.7 ± 0.1 and a feed rate of the $NH_3(aq)$ was adjusted so that a $NH_{3(aq)}$ concentration in the reaction mixture was kept steady at 12.0 ± 1 g/L. A reactor sample of the reaction mixture was taken every two hours and the D50 was measured from it. The reaction was stopped when the D50 of the reactor sample reached approximately the target value of 10.0 μm, a duration of the process was 11 h. A part of a liquid fraction of the reaction mixture was pumped out from the reactor during the process by using an external concentrator and a solid content of the reaction mixture in the reactor vessel was around 180 g/L in the end of the process.

Example 3.1 (seed particles preparation process)

An aqueous slurry of metal hydroxide was prepared according to a similar process to Example 1.1, except that a $NH_{3(aq)}$ concentration of the reaction mixture was kept at around 2.5 g/L, between values of 2.3 to 2.8 g/L. When the reaction reached a stable state, around 24 hours after the start, a reaction resultant, i.e. the aqueous slurry of hydroxide of nickel (i.e. seed particles) having D50 of 1.5 μm, was collected from the overflow of the reactor vessel.

Example 4.1 (seed particles preparation)

A starting solution was prepared by placing 3.4 L of DI water and 33 mL of 220 g/L $NH_3(aq)$ in a 3.65 L reactor vessel and adjusting the reactor temperature to 85 °C and kept at this temperature throughout the process. 220 g/L NaOH solution was added so that a pH value of the starting solution in the reactor vessel was adjusted to 12.7-12.9.
120 g/L metal sulfate solution comprising Ni, Mn, and Co (in a stoichiometric molar ratio, Ni:Mn:Co of 25:73:02) with a feed rate of 300 mL/h, 220 g/L $NH_3(aq)$ with a feed rate of 13 mL/h, 40 g/L ascorbic acid with a feed rate 60 mL/h, and 220 g/L NaOH solution with a feed rate of 214 mL/h were added continuously in the reactor vessel. The solutions were mixed with a mixer with a power density of around 20 kW/m$^3$ and a pH value of the reaction mixture was kept steady at 12.9 ± 0.1, so as to prepare a reaction mixture, an aqueous slurry. A $NH_{3(aq)}$ concentration in the reaction mixture was kept around 1.5-2.0 g/L. The reaction was done in a continuous mode. When the reaction reached a stable state, around 10 hours after the start, a reaction resultant, i.e. the aqueous slurry of hydroxide of Ni, Mn, and Co (i.e. seed particles) having D50 of 1.8 μm, was collected from the overflow of the reactor vessel.

Comparative example 1

A starting solution was prepared by placing 2.2 L of DI water, 120 mL of 220 g/L $NH_3(aq)$ and 30 mL of 220 g/L NaOH solution in a 3.65 L reactor vessel and adjusting the reactor temperature to 65 °C and kept at this temperature throughout the process. A pH value of the starting solution in the reactor vessel was 12.9.
Next, 120 g/L metal sulfate solution comprising Ni, Mn, and Co (in a stoichiometric molar ratio, Ni:Mn:Co of 65:15:20) with a feed rate of 500 mL/h, 220 g/L $NH_3(aq)$ with a feed rate of 56 mL/h and 220 g/L NaOH solution with a feed rate of 304 mL/h were added continuously into the starting solution. The solutions were mixed with a mixer with a power density of around 13.8 kW/m$^3$ for the first 2 hours and with a power density of around 6.4 kW/m$^3$ for the rest of the reaction, so as to prepare a reaction mixture, an aqueous slurry. After the start of the reaction a pH value of the reaction mixture was kept steady at 11.9 $\pm$ 0.1 and a $NH_{3(aq)}$ concentration of the reaction mixture was kept at 8 to 10 g/L. A sample of the reaction mixture was taken every two hours and the D50 was measured from it. The process step was stopped when the D50 of the sample reached the target value of 10.2 $\mu$m, a duration of the process step was 46 h. A part of a liquid fraction of the reaction mixture was pumped out from the reactor during the process by using an external concentrator.

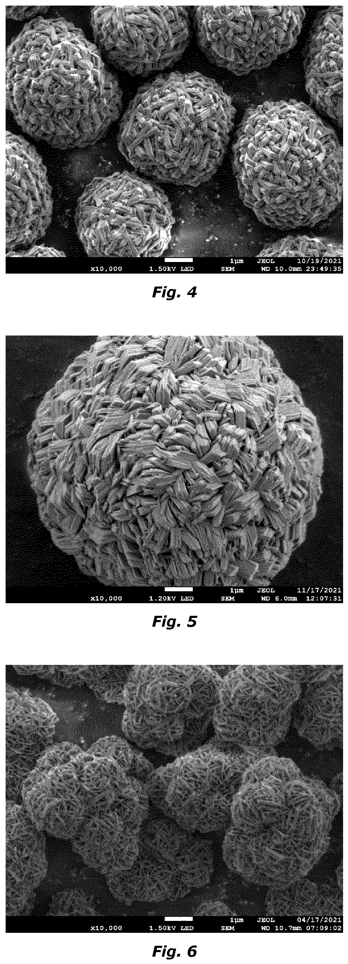

Fig. 6 shows a SEM image of particles obtained from 2 hours after the start of the process of Comparative Example 1 when the nucleation process has ended, i.e. when hardly any new nuclei are generated, when the D50 of the aqueous slurry was measured to be 3.90.

Comparative example 2

A starting solution was prepared by placing 2.2 L of DI water, 150 mL of 220 g/L NH3(aq) and 25 mL of 220 g/L NaOH solution in a 3.65 L reactor vessel and adjusting the reactor temperature to 65 °C and kept at this temperature throughout the process. A pH value of the starting solution in the reactor vessel was 11.4.

Next, 120 g/L metal sulfate solution comprising Ni, Mn, and Co (in a stoichiometric molar ratio, Ni:Mn:Co of 82:12:6) with a feed rate of 545 mL/h, 220 g/L $NH_{3(aq)}$ with a feed rate of 45 mL/h and 220 g/L NaOH solution with a feed rate of 327 mL/h were added continuously into the starting solution. The solutions were mixed with a mixer with a power density of around 5.8 kW/m$^3$ during the reaction, so as to prepare a reaction mixture, an aqueous slurry. After the start of the reaction a pH value of the reaction mixture was kept steady at 11.7 $\pm$ 0.1 and a $NH_{3(aq)}$ concentration of the reaction mixture was kept at 7.5 to 8.5 g/L. A sample of the reaction mixture was taken every two hours and the D50 was measured from it. The process step was stopped when the D50 of the sample reached the target value of 11.5 $\mu$m, a duration of the process step was 23 h. A part of a liquid fraction of the reaction mixture was pumped out from the reactor during the process.

Dry products of the examples

The reaction mixtures, i.e. the aqueous slurries of metal hydroxide obtained in EX1.3, EX2.3, CEX1 and CEX2 were filtered and washed with 220 g/L NaOH solution and hot DI water. The filter cakes were dried in the oven with 120 °C for 12 hours.

Summary of the examples

Some of the characteristics of the reaction conditions and the aqueous slurries obtained in the examples are illustrated in Table 1. Some of the characteristics of the dried hydroxides obtained in EX1.3, EX2.3, CEX1 and CEX2 are illustrated in Table 2.

Table 1

|  |  | Process type | D'50 Seed size ($\mu$m) | Reactor temp. (°C) | $NH_{3(aq)}$ (g/L) | pH (at 20°C) | Mixing power density (KW /m$^3$) | D50 particle size ($\mu$m) | Span A ($\mu$m), measured directly from the slurry |
|---|---|---|---|---|---|---|---|---|---|
|  | EX1.1 | continuous | - | 55 | 2 | 12.7 $\pm$ 0.1 | 35 | 1.2 | 1.2 |
|  | EX1.2 | batch | 1.2 | 85 | 2-3 | 11.8 $\pm$ 0.1 | 30/20 | 4.0 | 0.38 |
|  | EX1.3 | batch | 4.0 | 85 | 12.0 $\pm$ 1 | 11.7 $\pm$ 0.1 | 30/20 | 10.2 | 0.58 |
|  | EX2.2 | batch | 1.2 | 85 | 2-3 | 11.8 $\pm$ 0.1 | 33/30 | 5.0 | 0.40 |
|  | EX2.3 | batch | 5.0 | 85 | 12.0 $\pm$ 1 | 11.7 $\pm$ 0.1 | 30/20 | 10.1 | 0.36 |
|  | EX3.1 | continuous | - | 55 | 2.5 | 12.7 $\pm$ 0.1 | 35 | 1.5 | 1.26 |

(continued)

|  | Process type | D'50 Seed size (μm) | Reactor temp. (°C) | NH$_{3(aq)}$ (g/L) | pH (at 20°C) | Mixing power density (KW /m$^3$) | D50 particle size (μm) | Span A (μm), measured directly from the slurry |
|---|---|---|---|---|---|---|---|---|
| EX4.1 | continuous | - | 85 | 1.5-2.0 | 12.7 ± 0.1 | 35 | 1.8 | 1.2 |
| CEX1 | batch | - | 65 | 8-10 | 11.9± 0.1 | 13.8 / 6.4 | 8.7 | 0.41 |
| CEX2 | batch | - | 65 | 7.5-8.5 | 11.7± 0.1 | 5.8 | 11.9 | 0.38 |

Table 2

|  | Metal content [(Ni(mol%) / Mn(mol%)/ Co(mol%)] | D10 (μm) | D50 (μm) | D90 (μm) | span B [(D90-D10)/ D50], , measured from dried hydroxide | Tap density (g/m$^3$) | Surface area (m$^2$/g) |
|---|---|---|---|---|---|---|---|
| EX1.3 | 65.10/14.98/19.92 | 7.85 | 10.10 | 13.00 | 0.51 | 2.17 | 2.40 |
| EX2.3 | 94.19/2.82/2.99 | 8.25 | 10.15 | 12.35 | 0.40 | 1.98 | 3.80 |
| CX1 | 65.81/14.24/19.96 | 7.50 | 8.60 | 9.90 | 0.28 | 2.12 | 2.82 |
| CX2 | 82.25/5.62/12.13 | 10.00 | 11.70 | 14.70 | 0.33 | 1.95 | 5.20 |

**Claims**

1. A method for manufacturing a first aqueous slurry comprising first hydroxide or oxyhydroxide particles of at least one element for being used as a seed particles source in a precipitation process of a second hydroxide, wherein the at least one element include at least one of Ni, Co, and Mn, wherein the method comprises:

   - continuously supplying to a reactor vessel of a first flow of a metal salt solution comprising the one or more elements;
   - continuously supplying to the reactor vessel of a second flow of an aqueous solution of one or more alkali hydroxides; and
   - continuously supplying to the reactor vessel of a third flow of an ammonia aqueous solution (NH$_{3(aq)}$),
   mixing said 1$^{st}$, 2$^{nd}$ and 3$^{rd}$ flows so as to obtain the first aqueous slurry comprising the first hydroxide or oxyhydroxide particles in the reactor vessel,
   and the method further comprises continuously removing a fourth flow of the first aqueous slurry from the reactor vessel,
   **characterized in that:**

   the first aqueous slurry has a pH value being at most 13.0 and at least 12.0, said pH value being measured on a sample of the first aqueous slurry at 20°C, and **in that**
   the supply of the third flow is controlled so that a NH$_{3(aq)}$ concentration in the first aqueous slurry being at least 1.0 g/l and at most 5.0 g/l to limit a growth of the first hydroxide or oxyhydroxide particles to a median particle size D50 between a range of at least 0.7 μm and at most 3.0 μm.

2. The method according to claim 1, wherein the first aqueous slurry in the reactor vessel has a temperature being at least 40°C and at most 80°C, and preferably at least 45°C and at most 65°C, and more preferably at least 50°C and at most 60°C.

3. The method according to any of the previous claims, wherein the pH value of the first aqueous slurry in the reactor vessel is at least 12.4, preferably at least 12.6, when the pH value is measured on a sample of the first aqueous slurry at 20°C.

4. The method according to any of the previous claims, wherein the $NH_{3(aq)}$ concentration in the first aqueous slurry in the reactor vessel is at least 1.0 g/l and at most 4.0 g/l to limit the median particle size D50 of the first hydroxide or oxyhydroxide between a range of at least 0.7 $\mu$m and at most 2.0 $\mu$m; or
the $NH_{3(aq)}$ concentration in the first aqueous slurry in the reactor vessel is at least 2.0 g/l and at most 4.0 g/l to limit the median particle size D50 of the first hydroxide or oxyhydroxide between a range of at least 1.0 $\mu$m and at most 2.0 $\mu$m.

5. The method according to any of the previous claims, wherein the step of mixing is performed with a mixing energy, wherein the mixing energy is at least 15 kW per m$^3$ of the first aqueous slurry, preferably at least 20 kW per m$^3$ of the first aqueous slurry and more preferably at least 25 kW per m$^3$ of the first aqueous slurry.

6. The method according to any of the previous claims, wherein the at least one element in the first hydroxide or oxyhydroxide particles include:

- Ni in a content x, wherein 5.0 mol% $\leq$ x%,
- Co in a content y, wherein 0 $\leq$ y $\leq$ 30.0 mol%, and
- Mn in a content z, wherein 0 $\leq$ z $\leq$ 85.0 mol%,
- Al in a content q, wherein 0 $\leq$ q $\leq$ 10.0 mol%, and
- one or more additional elements in a content r, wherein the additional elements are elements from the list of B, Ba, Ca, Ce, Cr, Fe, La, Mg, Mo, Nb, Si, Sr, Ti, Y, V, W, Zn, Na, S and Zr, wherein 0 $\leq$ r $\leq$ 5.0 mol%, and

wherein x, y, z, q and r are contents expressed as mol% relative to the total molar content of the at least one element in the first hydroxide or oxyhydroxide, and wherein x+y+z+q+r = 100 mol%.

7. The method according to claim 6, wherein x $\geq$ 60.0 mol%, wherein preferably x $\geq$ 80.0 mol%.

8. A method for manufacturing a second aqueous slurry comprising second hydroxide or oxyhydroxide particles of one or more elements, wherein the one or more elements include at least one of Ni, Co, and Mn, wherein the method comprises:

d) providing an amount of a first aqueous slurry comprising first hydroxide or oxyhydroxide particles into a reactor vessel, wherein the first hydroxide or oxyhydroxide particles have a median particle size D50 between a range of at least 0.7 $\mu$m and at most 3.0 $\mu$m, preferably the first aqueous slurry being obtained according to a method of any one of claims 1 to 7;
e) supplying to the reactor vessel of a fifth flow of a metal salt solution comprising the one or more elements;
f) supplying to the reactor vessel of a sixth flow of an aqueous solution of one or more alkali hydroxides; and
g) maintaining conditions in the reactor vessel that cause a precipitation of the one or more elements from the metal salt solution as a hydroxide on the first hydroxide or oxyhydroxide to obtain in the reactor vessel the second aqueous slurry comprising the second hydroxide or oxyhydroxide particles of the one or more elements.

9. The method according to claim 8, further comprising supplying to the reactor vessel of a seventh flow of an aqueous solution of ammonia ($NH_{3(aq)}$).

10. The method according to claim 8 or 9, wherein in step a), providing an amount of a first aqueous slurry including performing the method according to any one of claims 1 to 7.

11. The method according to claim 9 or 10, wherein c) contains at least one of the following:

- the sixth flow is controlled so that the second aqueous slurry in the reactor vessel has a pH value of at most 12.2 and preferably at least 10, and more preferably at most 12.1 and at least 11.0, wherein the pH value of the second aqueous slurry is the pH value as measured on a sample of the second aqueous slurry at 20°C;
- the seventh flow is controlled so that a $NH_{3(aq)}$ concentration in the second aqueous slurry being at least 1.0 g/l and at most 20.0 g/l, preferably at least 1.5 g/l and at most 15.0 g/l;
- applying a mixing energy, wherein the mixing energy is at most 40 kW per m$^3$ of the second aqueous slurry, preferably at most 35 kW per m$^3$ of the second aqueous slurry; and/or the mixing energy is at least 5 kW per m$^3$ of the second aqueous slurry, preferably at least 10 kW per m$^3$ of the second aqueous slurry; and

- maintaining a temperature of the second aqueous slurry in the reactor vessel at least in 45°C, and preferably at least in 75°C, and more preferably at least or equal to 80°C.

12. The method according to any of the previous claims, wherein the one or more elements in the second hydroxide or oxyhydroxide particles include:

- Ni in a content b, wherein 5.0 mol% $\leq$ b $\leq$ 99.0 mol%,
- Co in a content c, wherein 0 $\leq$ c $\leq$ 30.0 mol%,
- Mn in a content d, wherein 0 $\leq$ d $\leq$ 85.0 mol%,
- Al in a content e, wherein 0 $\leq$ e $\leq$ 10.0 mol%, and
- one or more additional elements in a content f, wherein the additional elements are elements from the list of B, Ba, Ca, Ce, Cr, Fe, La, Mg, Mo, Nb, Si, Sr, Ti, Y, V, W, Zn, Na. S and Zr, wherein 0 $\leq$ f $\leq$ 5.0 mol%, and

wherein b, c, d, e and f are contents expressed as mol% relative to the total molar content of the one or more elements in the second hydroxide, and wherein b+c+d+e+f = 100 mol%.

13. The method according to claim 12, wherein x $\neq$ b; alternatively, wherein x > b and/or b $\geq$ 60.0 mol%, wherein d $\leq$ 30.0 mol%, wherein (b+d) $\geq$ 1.0 mol%; and/or wherein d $\geq$ 50.0 mol%, wherein f $\leq$ 3.0 mol%.

14. A method for manufacturing a powderous hydroxide or oxyhydroxide of one or more metal elements, wherein the method comprises I) manufacturing an aqueous slurry comprising hydroxide or oxyhydroxide particles of one or more metal elements according to any one of claims 8 to 13, II) separating the hydroxide or oxyhydroxide particles from a liquid fraction of the aqueous slurry and III) drying the separated hydroxide or oxyhydroxide particles.

15. A method for manufacturing a positive electrode active material comprising 1) manufacturing a powderous hydroxide or oxyhydroxide of one or more elements according to claim 14, 2) mixing the powderous hydroxide or oxyhydroxide with a lithium source so as to obtain a mixture, and 3) sintering the mixture at a temperature between 650°C and 1000°C.

*Fig. 1*

*Fig. 2*

*Fig. 3*

*Fig. 4*

*Fig. 5*

*Fig. 6*

Europäisches
Patentamt

European
Patent Office

Office européen
des brevets

## EUROPEAN SEARCH REPORT

**Application Number**

EP 22 21 6689

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 345 609 B2 (BASF SHANSHAN BATTERY MAT CO LTD [CN]) 31 May 2022 (2022-05-31) * claims; examples * ----- | 1-3,5-15 | INV. C01G53/00 C01G53/04 H01M4/525 |
| X | CN 109 962 237 A (HUNAN SHANSHAN ENERGY TECH CO LTD) 2 July 2019 (2019-07-02) * abstract; examples * ----- | 1-15 | |
| X | CN 113 526 569 A (FUJIAN EVERGREEN NEW ENERGY TECH CO LTD) 22 October 2021 (2021-10-22) * abstract; examples * ----- | 1-15 | |
| A | JP 2015 164123 A (SUMITOMO METAL MINING CO) 10 September 2015 (2015-09-10) * abstract; examples * ----- | 1-15 | |

**TECHNICAL FIELDS SEARCHED (IPC)**

C01G
H01M

The present search report has been drawn up for all claims

| Place of search | Date of completion of the search | Examiner |
|---|---|---|
| Munich | 30 June 2023 | Marucci, Alessandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 21 6689

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2023

| Patent document cited in search report | | Publication date | Patent family member(s) | | Publication date |
|---|---|---|---|---|---|
| US 11345609 | B2 | 31-05-2022 | CN | 107565125 A | 09-01-2018 |
| | | | EP | 3675253 A1 | 01-07-2020 |
| | | | JP | 7036924 B2 | 15-03-2022 |
| | | | JP | 2020532088 A | 05-11-2020 |
| | | | KR | 20200041978 A | 22-04-2020 |
| | | | US | 2021130189 A1 | 06-05-2021 |
| | | | WO | 2019037459 A1 | 28-02-2019 |
| CN 109962237 | A | 02-07-2019 | NONE | | |
| CN 113526569 | A | 22-10-2021 | NONE | | |
| JP 2015164123 | A | 10-09-2015 | JP | 6358077 B2 | 18-07-2018 |
| | | | JP | 2015164123 A | 10-09-2015 |

EPO FORM P0459

For more details about this annex : see Official Journal of the European Patent Office, No. 12/82